# EUROPÄISCHE PATENTSCHRIFT

(11) **EP 0 971 576 B1**
(45) Veröffentlichungstag und Bekanntmachung des Hinweises auf die Patenterteilung: **06.02.2002**
(21) Anmeldenummer: 98925435.4
(22) Anmeldetag: 24.03.1998
(51) Int. Cl.: A01G 1/00, E04D 11/00

(54) **VEGETATIONSELEMENT FÜR DIE BEGRÜNUNG VON MIT VERTIEFUNGEN UND ERHÖHUNGEN VERSEHENEN DÄCHERN**
VEGETATION ELEMENT FOR LANDSCAPING ROOFS HAVING ELEVATIONS AND RECESSES
ELEMENT A VEGETATION POUR L'ENGAZONNEMENT DE TOITS PRESENTANT DES CREUX ET DES BOSSES

(30) Priorität: 24.03.1997 DE 19712303
(43) Veröffentlichungstag der Anmeldung: 19.01.2000
(73) Patentinhaber: Behrens, Wolfgang, D-27243 Gross Ippener (DE)
(72) Erfinder: Behrens, Wolfgang, D-27243 Gross Ippener (DE)
(74) Vertreter: Körner, Peter
(86) Internationale Anmeldenummer: DE9800861
(87) Internationale Veröffentlichungsnummer: WO9842176

(56) Entgegenhaltungen:
- EP-A- 0 231 416
- EP-A- 0 339 186
- EP-A- 0 573 949
- EP-A- 0 706 753
- DE-A- 2 134 306
- DE-U- 9 414 587
- FR-A- 2 703 213
- US-A- 4 934 094
- PATENT ABSTRACTS OF JAPAN vol. 14, no. 570 (M-1060), 18. Dezember 1990 & JP 02 243860 A (SHIMIZU CORP.), 27. September 1990

## Beschreibung

Die Erfindung betrifft ein Vegetationselement für die Begrünung von mit Vertiefungen und Erhöhungen versehenen Dächern, insbesondere von Wellplattendächern, welches auf und mit dem Dach befestigt ist.

Es ist bekannt, Flachdächer, geneigte Dächer oder dergleichen, welche eine ebene untere Fläche aufweisen, dadurch zu begrünen, daß Matten aus organischem und/oder nichtorganischem Vliesmaterial aufgelegt und auf den Dächern befestigt werden.

Eine hinreichende Begrünung von Dächern mit Erhöhungen und Vertiefungen war bislang nicht möglich. Unter Dächern mit Erhöhungen und Vertiefungen sind hier insbesondere Dächer gemeint, die aus Wellzementplatten oder Stahltrapezprofilen bestehen, welche insbesondere zum Abdecken von in der Landwirtschaft genutzten Gebäuden, aber auch Industriegebäuden, verwendet werden. Eine Begrünung solcher Dächer mittels einfacher Matten war bislang nicht möglich, da die Matten in den Vertiefungen oder Sicken keinen ausreichenden Halt finden.

Zudem besteht das Problem, daß bei Auflage von Vegetationsmatten auf derartigen Dächer die Matten hohl liegen, wodurch die Gefahr besteht, daß die Matten durch Windeinflüsse abgehoben werden oder zumindest flattern. Durch dieses Flattern werden die Befestigungspunkte der Matte mit dem Dach besonderen Belastungen ausgesetzt, wodurch die Gefahr besteht, daß die Matten an den Befestigungspunkten reißen.

Der Erfindung liegt die Aufgabe zugrunde, ein Vegetationselement für die Begrünung von mit Vertiefungen und Erhöhungen versehenen Dächern, insbesondere von Wellplattendächern, zu schaffen, welches dauerhaft und stabil mit dem Dach verbunden werden kann und durch welches eine gleichmäßige Begrünung des Daches ermöglicht wird.

Diese Aufgabe wird mit einem Vegetationselement der eingangs genannten Art gelöst, das die Merkmale des kennzeichnenden Teils des Patentanspruchs 1 oder des Patentanspruchs 2 aufweist.

Gemäß einer ersten Alternative ist vorgesehen, daß das Vegetationselement mehrere, im Abstand parallel zueinander angeordnete Vegetationsträger aufweist, wobei die Vegetationsträger durch eine an den Oberflächen der Vegetationsträger angeordnete, als Gittergewebe ausgebildete Trägerschicht miteinander verbunden sind, wobei die Vegetationsträger jeweils aus einem Vegetationskörper, einem an der Unterseite des Vegetationskörpers befestigten Mantel und aus einer zwischen Oberseite des Vegetationskörpers und Trägerschicht angeordneten, Saatgut enthaltenden Saatenmatte bestehen, und wobei die Vertiefungen des Daches durch die Vegetationsträger ausfüllbar sind.

Bei dieser ersten Ausführungsform des erfindungsgemäßen Vegetationselementes füllen also mehrere Vegetationsträger jeweils eine Dachvertiefung vollständig aus. Hier liegen also einzelne, etwa stangen- oder balkenförmige Vegetationsträger in den jeweiligen Dachvertiefungen, wobei diese Vegetationsträger durch die oben liegende Trägerschicht miteinander verbunden sind. Da hierbei also die Dachvertiefungen vollständig ausgefüllt sind, wird der Gefahr begegnet, daß das Vegetationselement durch Windsogeinflüsse vom Dach abgehoben werden kann. Ein derartiges Vegetationselement kann so beschaffen sein, daß die Trägerschicht gerade auf den Erhöhungen des Daches aufliegt und eine Ebene bildet. Daß bei dieser Ausführungsform die Erhöhungen des Daches nicht von der Saatenmatte überdeckt sind, kann insofern hingenommen werden, als daß diese Erhöhungen, welche bei Beginn des Pflanzenwachstums zunächst als optisch störende Kahlstellen wahrnehmbar sind, im Laufe der Zeit durch die wachsenden Pflanzen, beispielsweise Sukkulenten, überwuchert oder überwallt werden. Da die Trägerschicht ein Gittergewebe ist, bilden die auf den Erhöhungen liegenden Bestandteile des Gittergewebes zusätzliche Verankerungspunkte für die Pflanzen, die sich um diese Gittergewebebestandteile herumwinden können.

Bei einer zweiten Ausführungsform ist vorgesehen, daß das Vegetationselement aus einer als Gittergewebe ausgebildeten Trägerschicht, aus mindestens einer unterhalb der Trägerschicht angeordneten, Saatgut enthaltenden Saatenmatte, aus einer Mehrzahl von Vegetationskörpern und aus mindestens einem die Vegetationskörper zumindest teilweise umgreifenden Mantel besteht, wobei die Vertiefungen des Daches mindestens durch die Vegetationskörper und durch den die Vegetationskörper umgreifenden Mantel ausfüllbar sind.

Bei dieser Ausführungsform verbindet also der Mantel die jeweils benachbarten Vegetationskörper miteinander, wodurch der Mantel auch die Erhöhungen des Daches überdeckt. Auch hier werden die Vertiefungen des Daches zumindest durch die Vegetationskörper und durch den Mantel ausgefüllt, wodurch auch hier der Gefahr des Abhebens des Vegetationselements durch Windeinflüsse begegnet wird. Eine derartige Ausgestaltung, bei der der Mantel die Erhöhungen des Daches überdeckt, kann sinnvoll sein, wenn hier der Mantel im Bereich der Erhöhungen des Daches zur Begrünung genutzt werden soll.

Bei beiden Ausführungsformen kann es vorteilhaft sein, wenn der Mantel und der Vegetationskörper aus unterschiedlichen Materialien bestehen. So kann es insbesondere vorteilhaft sein, wenn der Vegetationskörper aus hygroskopischer Steinwolle oder aus Kokosfasern besteht und daß der Mantel aus Kunstfasern besteht. Die hygroskopische Steinwolle oder die Kokosfasern stellen dabei eine ausreichende Speicherung von Wasser und darin gelösten Nährstoffen sicher, während der vliesartige Mantel aus Kunstfasern eine hohe Stabilität auch nach langjährigem Gebrauch gewährleistet.

Es kann vorteilhaft sein, wenn der Mantel an seinen Kanten mit der Saatenmatte verbunden ist. Durch diese Ausgestaltung wird der Vegetationskörper von Mantel und Saatenmatte vollständig umschlossen; es ist hierbei ausreichend, daß Saatenmatte und Mantel miteinander, beispielsweise durch Versteppen oder Kleben, verbunden werden.

Bei beiden Ausführungsformen liegt die als Gittergewebe augebildete Trägerschicht, vorzugsweise ein Gittergewebe aus UV-beständigem Kunststoff, auf der Saatenmatte auf und bildet die Oberfläche des Vegetationselements. Das Gittergewebe sichert einerseits eine gute Handhabbarkeit des Vegetationselements und eine leichte Befestigungsmöglichkeit an dem Dach, und zum anderen gewährleistet das Gittergewebe eine ausreichende Stabilität des Vegetationselements. Zur Verlegung auf einem Dach, insbesondere auf einem Wellzementdach, kann das Vegetationselement zusammen mit den Dachplatten montiert werden. Das Gittergewebe wird hierbei hinter bzw. unter die Schraubköpfe der Befestigungsschrauben gehakt. Auch eine nachträgliche Montage des Vegetationselements ist durch das Gittergewebe möglich. Auch hierbei werden die Gitterstäbe des Gittergewebes hinter die Schraubköpfe gehakt. Es ist aber auch möglich, das Gittergewebe an den Erhöhungen des Dachelements aufzukleben.

In einer bevorzugten Ausführungsform ist der Mantel an seiner Unterseite mit einer wasserundurchlässigen Folie verbunden. Dies kann dann vorteilhaft sein, wenn ausgeschlossen werden soll, das bei übereinander lappenden Dachplatten durch das Vegetationselement angestautes Wasser in die Ritzen der aufeinander liegenden Platten einfließen kann oder wenn vermieden werden soll, daß Wasser in durch Alterungsprozesse bedingte Risse in den Dachplatten einfließen kann.

Bevorzugterweise besteht die Saatenmatte aus verrottbaren organischen Fasern. Die Verrottbarkeit der Saatenmatte gewährleistet eine gute Umweltverträglichkeit des Vegetationselements, zudem können durch die Verrottungsprozesse freigesetzte organische Elemente den Pflanzen als zusätzliche Nährstoffbasis dienen. Möglich ist beispielsweise, daß die Saatenmatte aus Baumwollfasern besteht.

Es wird bevorzugt, daß der Querschnitt der Vegetationskörper dem Querschnitt der Vertiefungen entspricht. Durch diese Ausgestaltung wird vermieden, daß sich zwischen Vegetationskörper und Dachvertiefung Hohlräume bilden, in die Wind einwirken kann.

Bevorzugterweise sind Stirnseiten aneinander stoßender Vegetationskörper durch eine Wand getrennt. Insbesondere wird bevorzugt, daß die Wand mindestens eine horizontal verlaufende Öffnung aufweist. Durch diese Wand zwischen aneinander anstoßender Vegetationselemente wird erreicht, daß im Bereich der Wand durch den Vegetationskörper fließendes Wasser an der Wand angestaut wird, wodurch der der Dachneigung folgende Wasserstrom in seinem Ablauf verzögert wird. Dies ist insbesondere dann vorteilhaft, wenn das Wasser zur Überbrückung einer Trockenperiode zurückgehalten und gespeichert werden soll. Durch eine oder mehrere Öffnungen in der Wand wird gewährleistet, daß überschüssiges Wasser, insbesondere durch starke Niederschläge anfallendes Wasser, der Dachneigung folgend abfließen kann.

Bevorzugterweise ist das Vegetationselement aufrollbar. Bei dieser Ausgestaltung wird eine gute Handhabbarkeit des Vegetationselements erreicht.

Bevorzugterweise ist das Saatgut in der Saatenmatte diskret verteilt. Hierbei wird das Saatgut bei der Herstellung des Vegetationselements so in die Saatenmatte eingebracht, daß eine gleichbleibende Verteilung des Saatguts gewährleistet ist. Auf diese Weise ist es nicht nötig, später auftretende Fehlstellen nachzubessern.

In einer praktischen Ausführungsform der Erfindung ist vorgesehen, daß das Vegetationselement vor der Verbindung mit dem Dach fertig begrünt ist. Das heißt, daß das Vegetationselement vor dem Verlegen auf dem Dach gärtnerisch gepflegt und vorbehandelt wurde. Eine derartige Maßnahme kann sinnvoll sein, um von Anfang an Anwuchsausfällen vorzubeugen bzw. um diese Anwuchsausfälle bereits am Boden vor dem eigentlichen Verlegen des Vegetationselementes nachbessern zu können. Ist das Vegetationselement einmal auf dem Dach fertig verlegt, sind übliche Anwuchsausfälle nur schwer nachzubessern, da hierzu das Dach erst begangen werden muß, um dann in das Vegetationselement Pflanzenmaterial nachträglich einzubringen.

In einer weiteren vorteilhaften Ausgestaltung der Erfindung ist vorgesehen, daß das Vegetationselement feuerhemmend ausgerüstet ist bzw. daß wenigstens der Mantel feuerhemmend ausgerüstet ist. Eine derartige feuerhemmende Ausrüstung zumindest des Mantels des Vegetationselementes, beispielsweise mit Wasserglas, stellt sicher, daß den Anforderungen der DIN 4102 Genüge getan wird. Ist zumindest der Mantel des Vegetationselementes beispielsweise mit Wasserglas feuerhemmend ausgerüstet, bietet es den weiteren Vorteil, daß diese Maßnahme zusätzlich einen gewissen Grad an Wasserstauung ermöglicht. Dieser Wasseranstau gewährleistet, daß auch bei länger anhaltender Trockenheit Wasser über einen längeren Zeitraum im Vegetationselement gespeichert wird.

Weitere Vorteile und Ausgestaltungen der Erfindung werden anhand der nachfolgenden Beschreibung, der Zeichnung und der Patentansprüche näher erläutert. In der Zeichnung zeigt:
- Fig. 1: ein Ausführungsbeispiel des erfindungsgemäßen Vegetationselements von vorne im Querschnitt,
- Fig. 2: die Teilansicht eines erfindungsgemäßen Vegetationselements von oben,
- Fig. 3: die Teilansicht eines Ausführungsbeispiels des erfindungsgemäßen Vegetationselements von vorne im Querschnitt und
- Fig. 4: die Teilansicht eines erfindungsgemäßen Vegetationselements von vorne im Querschnitt im teilaufgerollten Zustand.

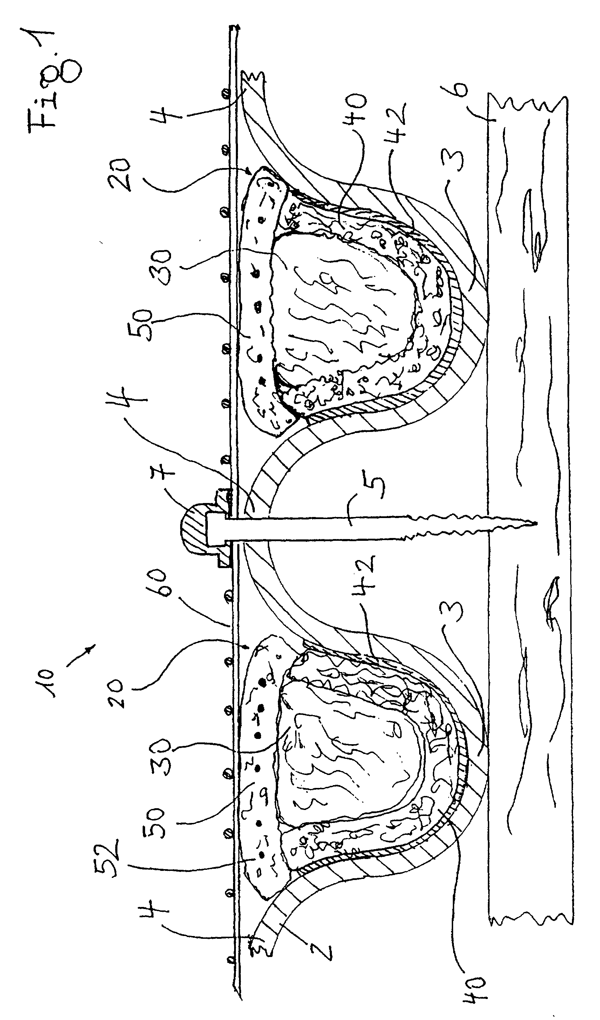

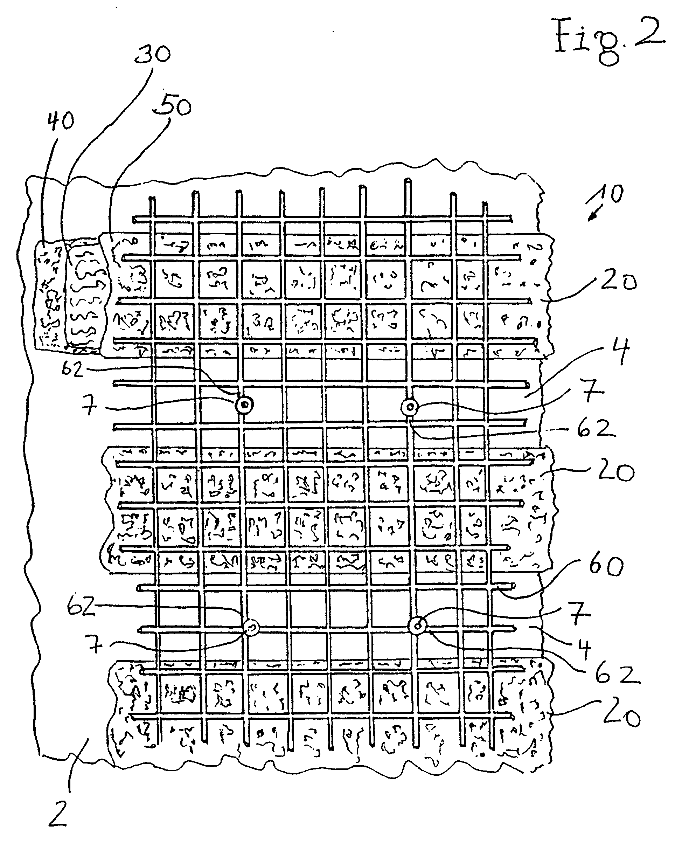

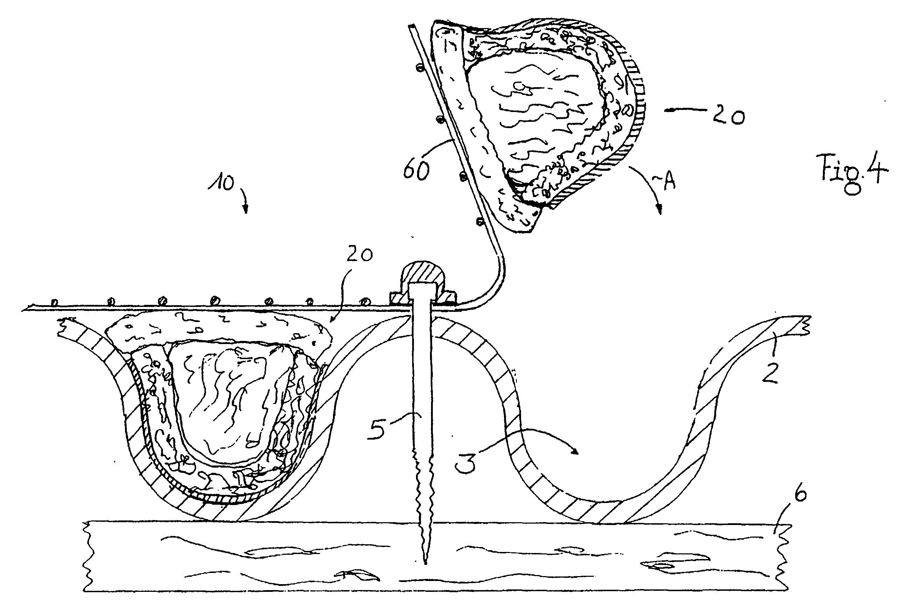

Eine bevorzugte Ausführungsform des erfindungsgemäßen Vegetationselements 10 ist in den Fig. 1 und 2 dargestellt. Das Vegetationselement 10 liegt auf einer Dachplatte 2 auf, welche mittels Befestigungselementen 5 an einem Dachbalken 6 befestigt ist. Das in den Fig.1 und 4 dargestellte Befestigungsmittel 5 ist eine Schraube, deren Kopf in üblicher Weise mit einem Kunststoffhut 7 gegen Korrosion geschützt ist.

Das Dachelement 2 ist eine Zementfaserwellplatte mit Vertiefungen 3 und Erhöhungen 4. Die Befestigungsmittel 5 sind in üblicher Weise durch die Erhöhungen 4 des Dachelements 2 geführt.

Das Vegetationselement 10 weist mehrere, durch eine Trägerschicht 60 miteinander verbundene Vegetationsträger 20 auf. Der Vegetationsträger 20 weist einen Vegetationskörper 30, einen Mantel 40 und eine Saatenmatte 50 auf. In der Saatenmatte 50 sind, was in Fig. 1 nur angedeutet ist, Samenkörner 52 gleichmäßig verteilt.

Die Samenmatte 50 besteht aus Baumwollvlies, der Vegetationskörper 30 aus hygroskopischem Steinwollvlies, der Mantel 40 besteht aus einem Vlies aus Kunststoffasern. Auf der Unterseite des Mantels 40 ist eine Kunststoffolie 42 aufkaschiert. Samenmatte 50 und Mantel 40 stoßen an ihren Kanten aneinander an. Die auf den Vegetationsträgern 20 aufliegende und mit den Vegetationsträgern 20 auf geeignete Weise, wie Versteppen oder Verkleben, verbundene Trägerschicht 60 ist ein Gittergewebe aus UV-beständigem Kunststoff. Wie den Fig. 1 und 2 entnehmbar, wird das Vegetationselement 10 durch die Trägerschicht 60 derart mit dem Dach 2 verbunden, daß einzelne Elemente 62 der Trägerschicht 60 hinter bzw. unter die Befestigungsmittel 5 gehakt werden.

Auf diese Weise läßt sich das Vegetationselement 10 auf einfachste Weise auf dem Dach 2 befestigen. Die Befestigung des Vegetationselements 10 kann hierbei während oder nach der Montage des Daches 2 erfolgen. Wie insbesondere den Fig. 1, 3 und 4 entnommen werden kann, entspricht der Durchmesser des Vegetationsträgers dem Durchmesser der Vertiefung 3 des Daches 2. Auf diese Weise füllt der Vegetationsträger 20 das nach oben offene Hohlprofil des Daches 2 vollständig aus, so daß kein Wind von unten an den Vegetationsträger 20 angreifen kann.

In Fig. 2 sind drei Vegetationsträger 20 eines Vegetationselements 10 von oben dargestellt, wobei die einzelnen Schichten des Vegetationsträgers 20 des in Fig. 2 dargestellten obersten Vegetationsträgers 20 zum besseren Verständnis teilweise freigelegt sind, so daß Mantel 40, Vegetationskörper 30 und Samenmatte 50 auch von oben gut erkennbar sind.

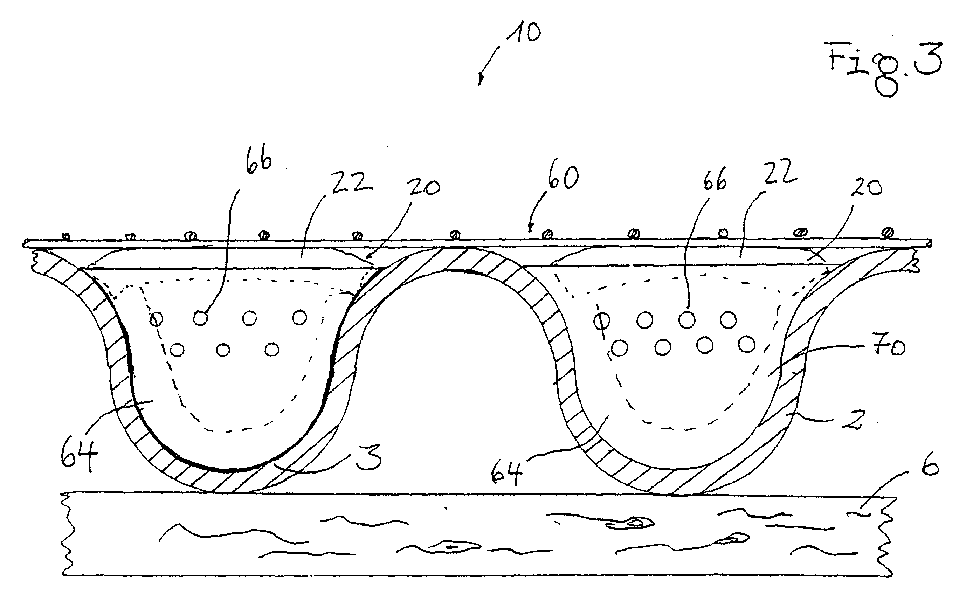

In Fig. 3 ist ein Vegetationselement 10 von vorne dargestellt. Vordere Stirnflächen 22 des Vegetationsträgers 20 sind durch eine Wand 64 teilweise abgedeckt. Die Form der Wand entspricht dabei der Querschnittsform der Vertiefung 3 des Daches 2. Die Wand 64 ist mit einer Mehrzahl von Löchern 66 versehen, welche im Abstand zum tiefsten Punkt der Vertiefung 3 angeordnet sind. Diese Wand 64 kann eine Kunststoffscheibe sein, welche zwischen aneinander anstoßender Vegetationsträger 20 zweier Vegetationselemente 10 eingesetzt werden kann. Die Wand 64 dient zum Anstauen von Wasser im Vegetationsträger 20, die in der Wand 64 vorgesehenen Löcher 66 dienen zum Abfließen von Überschußwasser.

In Fig. 4 ist das Aufrollen eines Vegetationselements 10 auf ein Dach 2 dargestellt, wobei die Aufrollbewegung des in Fig. 4 rechts angeordneten Vegetationsträgers 20 durch den Pfeil A angedeutet ist. Durch das Gittergewebe der Trägerschicht 60 wird hierbei das Auf- und Abrollen des Vegetationselements 10 erleichtert.

## Patentansprüche

1. Vegetationselement für die Begrünung von mit Vertiefungen und Erhöhungen versehenen Dächern, insbesondere von Wellplattendächern, welches auf und mit dem Dach befestigt ist, **dadurch gekennzeichnet, daß** das Vegetationselement (10) mehrere, im Abstand parallel zueinander angeordnete Vegetationsträger (20) aufweist, wobei die Vegetationsträger (20) durch eine an den Oberflächen der Vegetationsträger (20) angeordnete, als Gittergewebe ausgebildete Trägerschicht (60) miteinander verbunden sind, wobei die Vegetationsträger (20) jeweils aus einem Vegetationskörper (30), einem an der Unterseite des Vegetationskörpers (30) befestigten Mantel (40) und aus einer zwischen Oberseite des Vegetationskörpers (30) und Trägerschicht (60) angeordneten, Saatgut (52) enthaltende Saatenmatte (50) bestehen und wobei die Vertiefungen (3) des Daches (2) durch die Vegetationsträger (20) ausfüllbar sind.

2. Vegetationselement für die Begrünung von mit Vertiefungen und Erhöhungen versehenen Dächern, insbesondere von Wellplattendächern, welches auf und mit dem Dach befestigt ist, **dadurch gekennzeichnet, daß** das Vegetationselement (10) aus einer als Gittergewebe ausgebildeten Trägerschicht (60), aus mindestens einer unterhalb der Trägerschicht (60) angeordneten, Saatgut (52) enthaltenden Saatenmatte (50), aus einer Mehrzahl von Vegetationskörpern (30) und aus mindestens einem die Vegetationskörper (30) zumindest teilweise umgreifenden Mantel (40) besteht, wobei die Vertiefungen (3) des Daches (2) mindestens durch die Vegetationskörper (30) und durch den die Vegetationskörper (30) umgreifenden Mantel (40) ausfüllbar sind.

3. Vegetationselement nach Anspruch 1, **dadurch gekennzeichnet, daß** der Vegetationskörper (30) aus hygroskopischer Steinwolle besteht.

4. Vegetationselement nach Anspruch 1, **dadurch gekennzeichnet, daß** der Vegetationskörper (30) aus Kokosfasern besteht.

5. Vegetationselement nach Anspruch 1, **dadurch gekennzeichnet, daß** der Mantel (40) aus Kunstfasern besteht.

6. Vegetationselement nach einem der Ansprüche 1 und 5, **dadurch gekennzeichnet, daß** der Mantel (40) an seinen Kanten mit der Saatenmatte (50) verbunden ist.

7. Vegetationselement nach einem der Ansprüche 5 oder 6, **dadurch gekennzeichnet, daß** der Mantel (40) an seiner Unterseite mit einer wasserundurchlässigen Folie (42) verbunden ist.

8. Vegetationselement nach Anspruch 1 oder 2, **dadurch qekennzeichnet,** daß die Saatenmatte (50) aus verrottbaren organischen Fasern besteht.

9. Vegetationselement nach Anspruch 1 oder 2, **dadurch gekennzeichnet, daß** das Gittergewebe (60) aus UV-beständigem Kunststoff besteht.

10. Vegetationselement nach Anspruch 1 oder 2, **dadurch gekennzeichnet, daß** der Querschnitt der Vegetationsträger (20) dem Querschnitt der Dachvertiefungen (3) entspricht.

11. Vegetationselement nach einem der Ansprüche 1 - 10, **dadurch gekennzeichnet, daß** Stirnseiten (22) aneinander stoßender Vegetationsträger (20) durch eine Wand (64) getrennt sind.

12. Vegetationselement nach Anspruch 11, **dadurch gekennzeichnet, daß** die Wand (64) mindestens eine horizontal verlaufende Öffnung (66) aufweist.

13. Vegetationselement nach Anspruch 1 - 11, **dadurch gekennzeichnet, daß** das Vegetationselement (10) aufrollbar ist.

14. Vegetationselement nach Anspruch 1 oder 2, **dadurch gekennzeichnet, daß** das Saatgut (52) in der Saatenmatte (50) diskret verteilt ist.

15. Vegetationselement nach Anspruch 2, **dadurch gekennzeichnet, daß** der Mantel (40) mindestens zwei Vegetationsträger (20) miteinander verbindet.

16. Vegetationselement nach einem der Ansprüche 1 - 15, **dadurch gekennzeichnet, daß** das Vegetationselement (10) vor der Verbindung mit dem Dach (2) fertig begrünt ist.

17. Vegetationselement nach einem der Ansprüche 1 - 16, **dadurch gekennzeichnet, daß** das Vegetationselement (10) feuerhemmend ausgerüstet ist.

18. Vegetationselement nach einem der Ansprüche 1 - 18, **dadurch gekennzeichnet, daß** wenigstens der Mantel (40) des Vegetationselementes (10) feuerhemmend ausgerüstet ist.

## Claims

1. Vegetation element for grassing or planting roofs provided with elevations and depressions and in particular corrugated sheet roofs and which is fixed on and to the roof, **characterized in that** the vegetation element (10) has a plurality of spaced vegetation carriers (20), which are interconnected by a support layer (60) constructed as a scrim and located on the surfaces of the vegetation carriers (20), which in each case comprise a vegetation body (30), a jacket (40) fixed to the underside of the vegetation body (30) and a seed mat (50) containing seed (52) and placed between the top of the vegetation body (30) and the support layer (60), the depressions (3) of the roof (2) being fillable by vegetation carriers (20).

2. Vegetation element for grassing or planting roofs provided with elevations and depressions and in particular corrugated sheet roofs and which are fixed on and to the roof, **characterized in that** the vegetation element (10) comprises a support layer (60) constructed as a scrim, at least one seed mat (50) containing seed (52) placed below the support layer (60), a plurality of vegetation bodies (30) and at least one jacket (40) at least partly embracing the vegetation bodies (30). the depressions (3) of the roof (2) being at least fillable by the vegetation bodies (30) and by the jacket (40) embracing the vegetation bodies (30).

3. Vegetation element according to claim 1, **characterized in that** the vegetation body (30) comprises hygroscopic rock wool.

4. Vegetation element according to claim 1, **characterized in that** the vegetation body (30) comprises coconut fibres.

5. Vegetation element according to claim 1, **characterized in that** the jacket (40) comprises synthetic fibres.

6. Vegetation element according to one of the claims 1 and 5, **characterized in that** the edges of the jacket (40) are connected to the seed mat (50).

7. Vegetation element according to one of the claims 5 or 6, **characterized in that** the underside of the jacket (40) is connected to a waterproof sheet (42).

8. Vegetation element according to claim 1 or 2, **characterized in that** the seed mat (50) comprises decayable, organic fibres.

9. Vegetation element according to claim 1 or 2, **characterized in that** the scrim (60) comprises UV-resistant plastic.

10. Vegetation element according to claim 1 or 2, **characterized in that** the cross-section of the vegetation carrier (20) corresponds to the cross-section of the roof depressions (3).

11. Vegetation element according to one of the claims 1 to 10, **characterized in that** the end faces (22) of abutting vegetation carriers (20) are separated by a wall (64).

12. Vegetation element according to claim 11, **characterized in that** the wall (64) has at least one horizontally directed openings (66).

13. Vegetation element according to claims 1 to 11, **characterized in that** the vegetation element (10) can be rolled up.

14. Vegetation element according to claim 1 or 2, **characterized in that** the seed (52) is discreetly distributed within the seed mat (50).

15. Vegetation element according to claim 2, **characterized in that** the jacket (40) interconnects at least two vegetation carriers (20).

16. Vegetation element according to one of the claims 1 to 15, **characterized in that** the vegetation element (10) is completely grassed or planted prior to joining to the roof (2).

17. Vegetation element according to one of the claims 1 to 16, **characterized in that** the vegetation element (10) is given a fire-retardant finish.

18. Vegetation element according to one of the claims 1 to 18, **characterized in that** at least the jacket (40) of the vegetation element (10) is given a fire-retardant finish.

## Revendications

1. Elément à végétation pour l'engazonnement de toits présentant des creux et des bosses, en particulier de toits en plaques ondulées, qui est fixé sur le toit et avec lui, **caractérisé en ce que** l'élément à végétation (10) présente plusieurs supports de végétation (20) placés en parallèles et à distance les uns des autres, les supports de végétation (20) étant reliés les uns aux autres par une couche de maintien (60) réalisée en forme de structure grillagée à la surface des supports de végétation (20), les supports de végétation étant chacun constitués d'un corps de végétation (30), d'une enveloppe (40), fixée au côté inférieur du corps de végétation (30), et d'un mat à grains (50), contenant les grains (52) et disposé entre le côté supérieur du corps de végétation (30) et la couche de maintien (60), les creux (3) du toit (2) étant remplis de supports de végétation (20).

2. Elément à végétation pour l'engazonnement de toits présentant des creux et des bosses, en particulier de toits en plaques ondulées, l'élément à végétation étant fixé sur le toit et avec lui, **caractérisé en ce que** l'élément à végétation (10) consiste en une couche de végétation (60) réalisée en forme de structure grillagée, en au moins un mat de grains (50) contenant les grains (52) disposé sous la couche de maintien (60), en plusieurs corps de végétation (30) et en au moins une enveloppe (40) entourant au moins partiellement les corps de végétation (30), les creux (3) du toit (2) étant remplis au moins par les corps de végétation (30) et par l'enveloppe (40) entourant les corps de végétation (30).

3. Elément à végétation suivant la revendication 1, **caractérisé en ce que** le corps de végétation (30) est fait en laine de pierre hygroscopique.

4. Elément à végétation suivant la revendication 1, **caractérisé en ce que** le corps de végétation (30) est fait en fibres de coco.

5. Elément à végétation suivant la revendication 1, **caractérisé en ce que** l'enveloppe (40) est faite en fibres synthétiques.

6. Elément à végétation suivant l'une des revendications 1 et 5, **caractérisé en ce que** l'enveloppe (40) est reliée, sur ses côtés, au mat de grains (50).

7. Elément à végétation suivant l'une des revendications 5 ou 6, **caractérisé en ce que** l'enveloppe (40) est reliée, sur son côté inférieur, à une feuille (42), étanche à l'eau.

8. Elément à végétation suivant la revendication 1 ou 2, **caractérisé en ce que** le mat de grains (50) consiste en des fibres organiques qui peuvent s'effriter.

9. Elément à végétation suivant la revendication 1 ou 2, **caractérisé en ce que** la couche de maintien (60) est en matière synthétique résistant aux UV.

10. Elément à végétation suivant la revendication 1 ou 2, **caractérisé en ce que** la section du support de végétation (20) correspond à celle des creux du toit.

11. Elément à végétation suivant l'une des revendications 1 à 10, **caractérisé en ce que** les faces avant (22) des supports de végétation qui sont l'un contre l'autre sont séparées par une paroi (64).

12. Elément à végétation suivant la revendication 11, **caractérisé en ce que** la paroi (64) présente au moins une ouverture (66) horizontale.

13. Elément à végétation suivant lune des revendications 1 à 11, **caractérisé en ce que** l'élément à végétation (10) peut être enroulé.

14. Elément à végétation suivant la revendication 1 ou 2, **caractérisé en ce que** le grain (52) est réparti discrètement dans le mat de grains (50).

15. Elément à végétation suivant la revendication 2, **caractérisé en ce que** l'enveloppe (40) relie au moins deux supports de végétation (20), l'un avec l'autre.

16. Elément à végétation suivant l'une des revendications 1 à 15, **caractérisé en ce que** l'élément à végétation (10) est conservé prêt ; avant l'assemblage avec le toit (2).

17. Elément à végétation suivant l'une des revendications 1 à 16, **caractérisé en ce que** l'élément à végétation (10) est équipé coupe-feu.

18. Elément à végétation suivant l'une des revendications 1 à 17, **caractérisé en ce qu'**au moins l'enveloppe (40) de l'élément à végétation (10) est équipée coupe-feu.
